Europäisches Patentamt

European Patent Office

Office européen des brevets

(19)

(11) Numéro de publication: **0 168 329**
**B1**

(12)

# FASCICULE DE BREVET EUROPÉEN

(45) Date de publication du fascicule du brevet:
**18.05.88**

(51) Int. Cl.⁴: **B 65 G 47/58**

(21) Numéro de dépôt: **85401416.4**

(22) Date de dépôt: **11.07.85**

(54) Elévateur à godets comportant des moyens pour modifier la vitesse du godet dans la zone de chargement.

(30) Priorité: **12.07.84 FR 8411085**

(43) Date de publication de la demande:
**15.01.86 Bulletin 86/3**

(45) Mention de la délivrance du brevet:
**18.05.88 Bulletin 88/20**

(84) Etats contractants désignés:
**AT BE CH DE FR GB IT LI LU NL SE**

(56) Documents cité:
**FR-A-2 263 178**
**GB-A-1 525 464**
**GB-A-2 046 200**

(73) Titulaire: **SETEM SOCIETE D'ETUDES DE TECHNIQUE DE MANUTENTION, 40 rue du Drouillard, F-44620 la Montagne (FR)**

(72) Inventeur: **Tripoteau, Jean, 40, rue du Drouillard, F-44620 La Montagne (FR)**

(74) Mandataire: **Chevallier, Robert Marie Georges, Cabinet BOETTCHER 23, rue La Boétie, F-75008 Paris (FR)**

LIBER, STOCKHOLM 1988

## Description

Les élévateurs à godets sont généralement constitués par un élément d'entraînement (une sangle souple à base d'élastomère) pourvu d'une pluralité de godets sur l'une de ses faces et qui circule en continu entre une poulie de pied située à la base de l'élévateur et une poulie de tête (au sommet de ce dernier), l'élément d'entraînement possédant ainsi un brin montant et un brin descendant.

De manière classique, le chargement des godets est réalisé par admission du produit à élever à la base de l'élévateur, au voisinage de la poulie de pied, soit du côté du brin montant soit du côté du brin descendant. Il faut préciser à cet égard que la sangle pourvue de godets est enfermée dans un carter qui, outre une ou deux jambes enserrant les brins susdits, définit un caisson de pied où s'effectue le chargement et un caisson de tête pour ta réception et l'évacuation du produit lors de l'enroulement des godets autour de la poulie de tête. L'admission susdite se fait par le moyen d'une goulotte inclinée (ou de deux goulottes l'une côté montant, l'autre côté descendant) au travers de laquelle on déverse dans le caisson de pied le produit sous un débit fonction du débit de l'élévateur.

Ce type de chargement de l'élévateur présente de nombreux inconvénients dont, jusqu'à présent, il a fallu s'accomoder faute de pouvoir maîtriser les phénomènes dynamiques qui se produisent dans le caisson et qui engendrent une dégradation du produit, une usure de l'élévateur, une production de poussières dont on sait qu'elle peut être à la source des explosions, une consommation excessive de puissance et une limite à la vitesse maximale de la sangle donc à la capacité maximale de l'élévateur.

Les phénomènes susdits ont des causes multiples et différentes, au moins en partie, selon que l'on a affaire à un chargement côté brin montant ou un chargement côté brin descendant.

Dans le premier cas, la vitesse du flux de produit (granuleux ou pulvérulent) admis est de sens contraire à celle des godets. Il se produit alors des chocs qui sont préjudiciables aux matériaux friables ou engendrent une usure rapide des godets si la matière à transporter est abrasive. En outre les éclats ou fines particules détachées constituent la poussière susdite, facteur d'explosion, qui est véhiculée dans le sens ascendant et peut gagner toutes les parties de l'installation (silos de stockage, trémies...) dans laquelle est intégré l'élévateur. L'une des solutions tendant à réduire ces inconvénients réside dans la limitation de la vitesse des godets avec corrélativement la diminution de la capacité maximale de l'élévateur.

On a alors pensé procéder à un chargement du côté du brin descendant de la sangle, car à cet endroit la vitesse du produit admis est dans le même sens que celle des godets. On réduit alors la violence des chocs mais on constate que les godets "draguant" alors le produit avant même de passer la poulie de pied, appliquent à ce produit une force centrifuge, au passage de la poulie de pied, qui tend à éjecter le produit hors du godet à la base de l'élévateur. On constate alors qu'une partie du produit forme une masse dans le pied de l'élévateur, du côté de la colonne montante qui est constamment alimentée par le produit éjecté. Cette masse est traversée par les godets, et notamment leur partie d'extrémité qui possède la vitesse linéaire la plus grande, puisque la plus éloignée du centre de la poulie, et qui agit dans cette masse comme un broyeur engendrant alors une fine division du produit, une abrasion des godets et la formation de poussière. En outre cette masse est animée d'un mouvement tourbillonnaire par le passage des godets et les particules de produit frottent les unes sur les autres et sur les parois du caisson en se détériorant rapidement. Il faut noter que ce phénomène de recyclage et de présence d'une masse de produit en pied d'élévateur est également constaté pour une alimentation du côté du brin montant, car le produit admis n'est jamais en totalité pris en charge par les godets du fait notamment des rebondissements et des débordements.

L'un comme l'autre de ces types de chargement présentent donc de nombreux inconvénients dont on n'a pu jusqu'à présent que réduire les effets en limitant les vitesses donc les débits ou en prévoyant soit des dépoussiéreurs, soit des dispositions anti-explosions telles que des volets ejectabtes dans les caissons d'élévateurs.

La présente invention entend proposer une solution, en ce qui concerne le chargement d'un élévateur, qui permet de supprimer les inconvénients susdits. Elle prend en compte le fait que si l'on parvient à diminuer la vitesse relative entre le produit et les godets dans la zone de chargement, on diminue l'intensité des chocs.

Le document FR-A-2 263 178 montre qu'il est possible de ralentir voire d'arrêter une nacelle articulée à un support de charge, bien que ce dernier soit entraîné de manière continue par un organe d'entraînement. Ce document ne révèle cependant pas la manière d'appliquer ce principe à un élévateur à godets solidaires d'une bande.

Le document GB-A-1 525 464 montre quant à lui qu'il est possible de faire suivre un trajet concave à une bande équipée de godets sans pour autant révéler la manière d'exploiter cette possibilité au chargement.

L'invention rend possible l'entraînement d'une sangle d'élévateur à une vitesse au moins égale à celle, critique, classiquement mesurée à la pointe extrême du godet lorsqu'il passe autour de la poulie de pied, et la manutention de produits extrêmement fragiles avec du matériel standard. Par ailleurs l'invention permet l'obtention de débits importants avec des élévateurs peu encombrants donc moins onéreux.

A cet effet, l'invention a pour objet un élévateur à godets perfectionné comprenant, comme dans le document GB-A-1 525 464, un élément d'entraînement souple animé d'un mouvement de translation sensiblement vertical de bas en haut auquel est attelée une pluralité de godets régulièrement espacés le long dudit élément et s'étendant transversalement au sens de translation et d'un côté dudit élément d'entraînement, un dispositif de remplissage constitué par un dispositif d'amenée du produit à élever dans une zone déterminée du volume balayé par les godets lors de la translation de l'élément d'entraînement et des organes de guidage dudit élément d'entraînement imprimant à ce dernier un trajet présentant une concavité tournée vers l'extrémité des godets la plus étoignée dudit élément.

Selon la caractéristique essentielle de l'invention lesdits organes de guidage constituent des moyens pour réduire dans ladite zone la vitesse de chaque point du godet autre que ceux appartenant à la partie d'attelage du godet audit élément, tandis que le point d'extrémité du dispositif d'amenée du produit est situé sensiblement au niveau de la base de la surface verticale balayée par ladite extrémité des godets lorsque celle-ci a repris une vitesse égale à celle de l'élément d'entraînement.

Dans un mode de réalisation préféré de l'invention, le trajet concave susdit possède un centre de courbure moyen situé du côté de l'extrémité libre desdits godets à un niveau horizontal sensiblement identique à celui de l'extrémité supérieure du trajet concave situé sous le niveau horizontal du point d'extrémité du dispositif d'amenée.

Pour une première application de l'invention, par exemple aux produits fragiles, le rayon de courbure moyen du trajet susdit est sensiblement égal à la distance séparant l'élément d'entraînement de l'éxtrémité libre de chaque godet.

Dans d'autres applications, notamment pour des élévateurs à vitesse rapide, le rayon de courbure moyen dudit trajet est inférieur à la distance séparant l'élément d'entraînement de l'extrémité libre de chaque godet.

On notera que le trajet susdit pourra être soit polygonal dont le côté supérieur est sensiblement vertical, soit en arc de cercle dont la tangente au point haut est sensiblement verticale.

L'invention sera mieux comprise en regard de la description donnée ci-après à titre d'exemple purement indicatif et non limitatif qui permettra d'en dégager les avantages et les caractéristiques secondaires.

Il sera fait référence aux dessins annexés dans lesquels:
- la figure 1 est un schéma d'un mode de réalisation de l'élévateur selon l'invention,
- les figures 2, 3 et 4 illustrent schématiquement différentes possibilités de construction de l'élévateur selon l'invention.

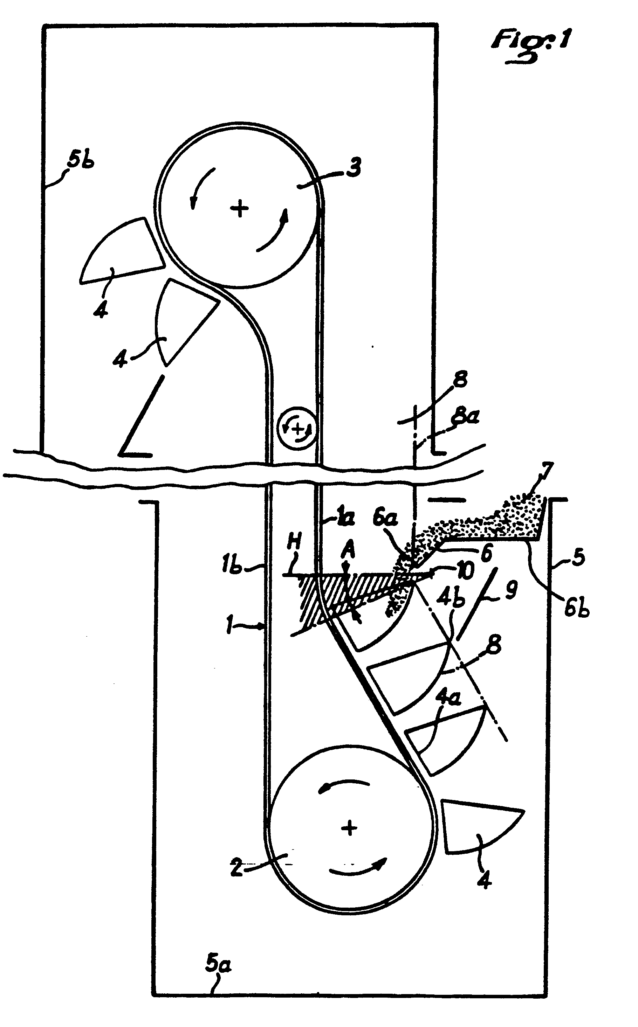

En se reportant tout d'abord à la figure 1, on voit un élévateur perfectionné selon l'invention qui comprend un élément d'entraînement 1 constitué par exemple sous la forme d'une sangle souple sans fin s'enroulant autour d'une poulie de pied 2 et une poulie de tête 3. Ces poulies partagent ladite sangle en un brin montant 1a et un brin descendant 1b dont les sens de circulation sont essentiellement verticaux. La face de la sangle 1 qui ne coopère pas avec les poulies est équipée d'une pluralité de godets 4, régulièrement répartis qui lui sont attelés par des organes non représentés (par exemple des boutons avec éventuellement des entretoises) traversant la paroi arrière 4a des godets. Un carter 5 constitue une enveloppe intégrale de l'élévateur et définit un caisson de pied 5a, un caisson de tête 5b et, entre eux, une jambe verticale dont ne sont représentées que les extrémités sur le dessin. On remarquera que, sur cette figure, il n'existe qu'une seule jambe qui enserre les deux brins de la sangle. L'élévateur selon l'invention peut également comporter deux jambes séparées relatives respectivement à chacun des brins. De même les dimensions des poulies de tête et de pied peuvent être différentes de celles représentées et seront fonction des divers cas particuliers d'utilisation de l'élévateur.

L'élévateur comporte en outre une goulotte 6, se terminant par un point bas 6a, qui permet d'alimenter les godets en produit 7 (des grains, des céréales, des matières pulvérulentes ou granuleuses...). Cette goulotte peut affecter plusieurs formes qui seront adaptées à la nature des produits admis. Elle est ici représentée à la suite d'une plateforme vibrante 6b qui permet de conduire le produit jusque dans le volume 8 balayé par les godets 4 lors de leur déplacement avec la sangle 1. Un déflecteur 9 pourra compléter le dispositif d'admission du produit pour collecter les particules de ce dernier pouvant être déviées de leur trajectoire initiale. La zone du volume 8 située sous le point bas 6a susdit, dans laquelle est introduit le produit, est dite zone de chargement et l'invention a pour objet principal des moyens pour que, dans cette zone, la vitesse des godets soit diminuée par rapport à la vitesse de la sangle qui est invariable.

Ces moyens sont constitués par un trajet particulier du brin ascendant 1a de la sangle 1 dans la zone de chargement qui est tel qu'il présente une concavité tournée vers le dispositif d'admission du produit. On comprend qu'ainsi on crée un gradient de vitesse le long de la dimension transversale à la sangle du godet depuis sa face arrière 4a qui possède la même vitesse que la sangle 1 jusqu'à son extrémité la plus éloignée de la sangle ou bec 4b.

Cette concavité du trajet de la sangle 1 peut être obtenue par de multiples moyens tels que des galets ou des patins de guidage prenant en charge les parties latérales de la sangle 1 non couvertes par la paroi arrière des godets.

Dans le cas de la figure 1, le trajet de la sangle forme un arc de cercle de centre 10 et d'angle au centre A dont la valeur sera déterminée expérimentalement en fonction de la taille des godets, de leur pas d'implantation sur la sangle, de la vitesse de cette dernière, de la nature du produit à manutentionner...

La valeur du rayon de courbure de la concavité dépendra de l'application de l'élévateur comme expliqué en regard des figures suivantes.

On notera enfin, en ce qui concerne cette figure 1, que le point d'extrémité 6a du dispositif d'admission 6 du produit est situé au voisinage de la surface 8a, enveloppe du volume 8, engendrée par l'extrémité 4b du godet, à proximité et au-dessus de l'endroit où celle-ci reprend une vitesse égale à celle de la sangle 1.

Ainsi le produit quittant le dispositif 6 au point 6a tombe par gravité dans la partie du godet qui est ralentie. Les chocs en résultant sont alors d'intensité diminuée. Ce remplissage se poursuit jusqu'au moment où le godet reprend une vitesse uniforme égale à celle de la sangle 1, c'est-à-dire lorsqu'il quitte la courbure au-delà du niveau horizontal H du centre de courbure 10. Tant que le bec 4b du godet n'est pas passé au niveau du point 6a situé au-dessus du niveau H, le godet continue de recevoir du produit, mais sous une vitesse relative plus importante qui, cependant, ne comporte pas les inconvénients d'engendrer des chocs importants, car le produit déjà dans le godet constitue un amortissement du produit y parvenant à grande vitesse.

La hauteur séparant le niveau du point 6a du niveau H où le godet reprend une vitesse uniforme sera fonction également des dimensions des godets, de la valeur du rayon de courbure, de la vitesse de l'élévateur pour qu'un maximum de produit puisse atteindre le godet situé dans la zone de ralentissement.

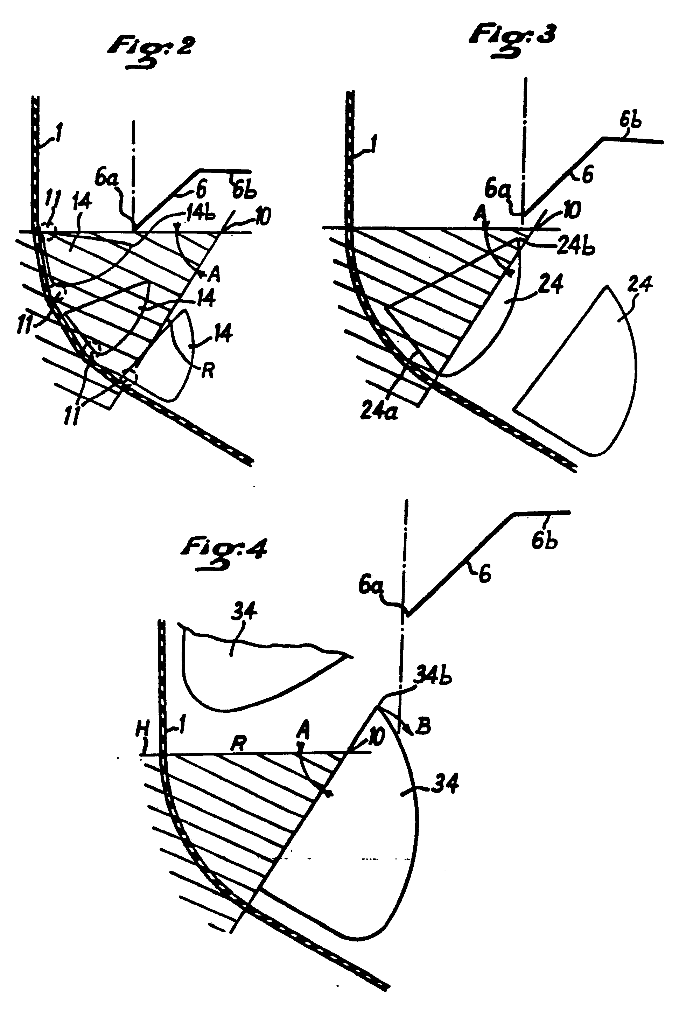

Sur les figures 2, 3 et 4 on a représenté de manière schématique trois possibilités d'application des dispositions selon l'invention. On retrouve sur ces figures les éléments décrits précédemment avec les mêmes références.

Sur le schéma de la figure 2, on voit que la concavité du trajet de la sangle 1 est le fait de galets de guidage 11 qui déterminent un polygone dont les sommets sont sensiblement sur un cercle de centre 10 qui est le centre moyen de la courbure. Les godets 14 sont de petite taille par rapport au rayon R de courbure de la sangle 1. Dans ce cas, l'extrémité 14b de ces godets 14 possède, dans l'angle A, une vitesse non négligeable par rapport à la sangle. Cette disposition peut convenir à des produits résistants alimentés par le dispositif 6.

Sur le schéma de la figure 3, les godets 24 possèdent leur bec 24b qui passe au voisinage immédiat du centre 10, voire sur ce centre. Ainsi pendant tout le temps nécessaire à la paroi arrière 24a de ces godets pour décrire la courbure d'angle au centre A, le bec 24b est maintenu pratiquement immobile sur le centre 10 et le flux de produit issu du point 6a parvient au godet sous une vitesse relative qui résulte de sa seule vitesse de chute par gravité. Une telle disposition convient parfaitement à la manutention de produits fragiles.

Enfin, la troisième possibilité d'application est illustrée par le schéma de la figure 4 dans lequel les godets 34 possèdent un bec 34b distant de la sangle 1 d'une valeur supérieure à celle du rayon R de courbure. Dans ce cas, le bec 34b tourne autour du centre 10 dans le sens B pendant que la paroi 34a décrit la courbure d'angle au centre A. Le bec 34b est alors animé d'une vitesse de même sens que celle du produit issu du point 6a. On peut alors avoir une vitesse relative entre produit et godet voisine de zéro. Cette disposition convient aux produits extrêmement fragiles et aux grandes vitesses d'élévateur. Le point 6a du dispositif de chargement sera situé à une distance verticale suffisante du niveau H du centre 10 pour que le temps de remplissage soit suffisant.

Les moyens de l'invention, permettant de maîtriser la vitesse relative des godets et du produit au chargement de ce dernier, apportent une solution définitive à tous les inconvénients cités en préambule de la présente description, permettent d'adapter très facilement les élévateurs aux produits à manutentionner, et autorisent des vitesses d'élévation très supérieures à celles, réduites, utilisées à ce jour.

L'invention trouve une application intéressante dans le domaine de la manutention et de l'industrie des élévateurs.

## Revendications

1. Elévateur à godets (4) comportant un élément d'entraînement (1) souple animé d'un mouvement de translation sensiblement vertical ascendant auquel est attelée une pluralité de godets (4) régulièrement espacés le long dudit élément (1) et s'étendant transversalement au sens de translation et d'un côté dudit élément d'entraînement (1), un dispositif de remplissage constitué par un dispositif d'amenée (6) du produit (7) à élever dans une zone déterminée du volume (8) balayé par les godets (4) lors de la translation de l'élément d'entraînement (1), et des organes de guidage dudit élément d'entraînement (1) imprimant à ce dernier un trajet présentant une concavité tournée vers l'extrémité (4b) des godets (4) la plus éloignée dudit élément (1), caractérisé en ce que lesdits organes de guidage constituent des moyens pour réduire dans ladite zone la vitesse de chaque point du godet (4) autre que ceux appartenant à la partie (4a) d'attelage du godet (4) audit élément (1) d'entraînement, tandis que le point d'extrémité (6a) du dispositif (6) d'amenée du produit est situé sensiblement au niveau de la base de la surface (8a) balayée par ladite extrémité (4b) des godets lorsque celle-ci a repris une vitesse égale à celle de l'élément d'entraînement (1).

2. Elévateur selon la revendication 1, caractérisé en ce que le trajet concave susdit possède un centre de courbure moyen situé du côté de l'extrémité libre (4b) desdits godets (4) à un niveau horizontal (H) sensiblement identique à celui de l'extrémité supérieure du trajet concave situé sous le niveau horizontal du point d'extrémité (6a) du dispositif d'amenée.

3. Elévateur selon la revendication 2, caractérisé en ce que le rayon de courbure (R) moyen du trajet susdit est sensiblement égal à la distance séparant l'élément d'entraînement 1 de l'extrémité libre (24b) de chaque godet (24).

4. Elévateur selon la revendication 2 caractérisé en ce que le rayon de courbure moyen (R) dudit trajet est inférieur à la distance séparant l'élément d'entraînement (1) de l'extrémité libre (34b) de chaque godet (34).

5. Elévateur selon la revendication 2, caractérisé en ce que le trajet concave susdit est polygonal.

6. Elévateur selon la revendication 2, caractérisé en ce que le trajet concave susdit est un arc de cercle.


### Patentansprüche

1. Becherförderer, der ein biegsames Förderelement (1) aufweist, dem eine im wesentlichen vertikal aufsteigende Translationsbewegung erteilt wird und an dem eine Anzahl Becher (4) in regelmässigem Abstand längs des Förderelementes und an einer Seite desselben befestigt sind und sich quer zur Richtung der Translationsbewegung erstrecken, eine Füllvorrichtung, die aus einer Zufuhrvorrichtung (6) für das Gut (7), das in eine Zone vorgegebenen Volumens (8) anzuheben ist, die durch die Becher (4) während der Translation des Förderelementes (1) überstrichen wird, sowie Führungselemente für das Förderelement (1), die diesem eine Bahn erteilen, die eine konkave Wölbung aufweist, die gegen das vom Förderelement (1) am weitesten entfernte Ende (4b) der Becher (4) gerichtet ist, dadurch gekennzeichnet, dass die Führungselemente Einrichtungen bilden, um in der erwähnten Zone die Geschwindigkeit eines jeden Punktes des Bechers (4) mit Ausnahme jener, die zum Befestigungsabschnitt (4a) des Bechers (4) am Förderelement (1) gehören, zu verringern, während der Endpunkt (6a) der Zufuhrvorrichtung (6) für das Gut im wesentlichen auf der Höhe der Basis der Fläche (8a) liegt, die durch das Ende (4b) der Becher überstrichen wird, wenn dieses eine Geschwindigkeit wieder erreicht hat, die gleich gross wie jene des Förderelementes (1) ist.

2. Becherförderer nach Anspruch 1, dadurch gekennzeichnet, dass die konkave Bahn einen Mittelpunkt der mittleren Krümmung aufweist, der neben dem freien Ende (4b) der Becher (4) auf einem horizontalen Niveau (H) liegt, das im wesentlichen identisch mit jenem des oberen Endes der konkaven Bahn ist, und unter dem horizontalen Niveau des Endpunktes (6a) der Zufuhrvorrichtung liegt.

3. Becherförderer nach Anspruch 2, dadurch gekennzeichnet, dass der mittlere Krümmungsradius (R) der Bahn im wesentlichen gleich der Entfernung zwischen dem Förderelement (1) und dem freien Ende (24b) eines jeden Förderers (24) ist.

4. Becherförderer nach Anspruch 2, dadurch gekennzeichnet, dass der mittlere Krümmungsradius (R) der Bahn kleiner als die Entfernung zwischen dem Förderer und dem freien Ende (34b) eines jeden Bechers (34) ist.

5. Becherförderer nach Anspruch 2, dadurch gekennzeichnet, dass die konkave Bahn polygonal ist.

6. Becherförderer nach Anspruch 2, dadurch gekennzeichnet, dass die konkave Bahn ein Kreisbogen ist.


### Claims

1. Bucket elevator (4) comprising a flexible drive member (1) driven with a substantially vertical translation motion in the upwards direction and having a plurality of buckets (4) fixed thereto at regular intervals, said buckets extending transversely to the direction of motion from one side of said drive member, a filling device constituted by a device (6), for bringing material (7) to be elevated into a predetermined zone of the volume (8) swept by the buckets (4) as they are driven by the drive member (1), and means for guiding said drive member (1) and for causing it to follow a path which is concave towards the free tips (4b) of the buckets (4) furthest from said drive member (1), characterized in that said guiding means constitute means for reducing in said predetermined zone the speed of each point of the bucket (4) other than the points (4a) directly fixing the bucket (4) to said drive member (1), and in that the end point (6a) of said bringing device (6) is situated substantially adjacent to the base of the area (8a) swept by said bucket tips (4b) when they return to a speed equal to the speed of the drive member (1).

2. Elevator according to claim 1, wherein said concave path has an average center of curvature situated on the free tip (4b) side of said buckets (4) at a horizontal level (H) which is substantially identical to the top of the concave path and which is below the horizontal level of the end point (6a) of the bringing device.

3. An elevator according to claim 2, wherein the average radius (R) of curvature of the said concave path is substantially equal to the distance between the drive member (1) and the free tip (24b) of each bucket (24).

4. An elevator according to claim 2, wherein the average radius (R) of curvature of said concave path is less than the distance between the drive

9     **0 168 329**     10

member (1) and the free tip (34b) of each bucket (34).

5. An elevator according to claim 2, wherein the said concave path is polygonal.

6. An elevator according to claim 2, wherein the said concave path is an arc of a circle.

*Fig. 1*

**Fig. 2**

**Fig. 3**

**Fig. 4**